Europäisches Patentamt

(19) European Patent Office

Office européen des brevets

(11) Numéro de publication: **0 211 751**
**B1**

(12) **FASCICULE DE BREVET EUROPEEN**

(45) Date de publication du fascicule du brevet:
24.05.89

(21) Numéro de dépôt: **86401690.2**

(22) Date de dépôt: **29.07.86**

(51) Int. Cl.⁴: **B 60 H 1/22,** F 24 J 3/00,
F 16 D 43/10

(54) Générateur de chaleur pour véhicule automobile.

(30) Priorité: **30.07.85 FR 8511598**

(43) Date de publication de la demande:
**25.02.87 Bulletin 87/9**

(45) Mention de la délivrance du brevet:
**24.05.89 Bulletin 89/21**

(84) Etats contractants désignés:
**DE GB IT SE**

(56) Documents cités:
**DE-A- 836 984**
**FR-A- 458 259**
**FR-A- 2 276 190**
**FR-A- 2 500 135**
**FR-A- 2 505 996**
**FR-A- 2 530 321**
**FR-A- 2 540 980**
**US-A- 3 164 147**
**US-A- 4 295 461**

(73) Titulaire: **VALEO, 64 Avenue de la Grande Armée,
F-75017 Paris (FR)**

(72) Inventeur: **Menard, Denis, 82 rue du 22 Septembre,
F-92400 Courbevoie (FR)**
Inventeur: **Herbulot, Jean, 80 rue du Docteur Roux,
F-95130 Franconville (FR)**

(74) Mandataire: **CABINET BONNET-THIRION, 95 Boulevard
Beaumarchais, F-75003 Paris (FR)**

## Description

L'invention se rapporte à un générateur de chaleur pour véhicule automobile, plus particulièrement adapté pour fournir un chauffage d'appoint à l'habitacle du véhicule et/ou atteindre et entretenir une température de fonctionnement suffisante du moteur, même au ralenti.

On connaît des installations de chauffage d'appoint pour véhicule automobile dans lesquelles la chaleur est engendrée en entretenant une circulation de fluide et en créant des pertes de charge dans la circulation de ce fluide. C'est ainsi que de nombreux systèmes proposés comportent une restiction et une pompe forçant un liquide à travers cette restriction. D'autres systèmes connus utilisent des éléments à aubages dont l'un est bloqué en rotation et entre lesquels un liquide est admis à circuler, en s'échauffant par suite des frottements entretenus entre les éléments à aubages. L'invention se rapporte à un autre concept de production de chaleur, utilisant des éléments à friction plongés dans un fluide caloporteur. Par exemple, le brevet US-A-4 295 461 décrit un tel système dans lequel le serrage des éléments de friction est assuré par un agencement de masselottes centrifuges. La puissance calorifique dépend donc de la vitesse. L'invention vise plus particulièrement une régulation de la puissance calorifique produite, rendant cette dernière relativement indépendante de la vitesse de rotation du moteur du véhicule automobile par lequel les éléments à friction sont actionnés.

Par rapport au brevet US-A-4 295 461 qui décrit déjà un générateur de chaleur pour véhicule automobile à moteur du type comportant une enceinte renfermant des moyens à friction mécanique couplés audit moteur pour être entraînés en rotation, des moyens pour faire circuler un fluide caloporteur dans ladite enceinte et des moyens de serrage variable desdits moyens à friction mécanique, l'invention est caractérisée en ce que les moyens de serrage sont constitués par des moyens de sollicitation à action élastique agencés pour s'exercer sur les moyens de serrage dans un sens propre à provoquer ledit serrage et par des moyens pour réduire le serrage desdits moyens à friction mécanique lorsque la vitesse d'entraînement augmente.

Cette modulation du serrage des moyens à friction mécanique peut être obtenue de différentes façons, soit par action mécanique en utilisant des masselottes exploitant la force centrifuge dans un sens tendant à desserrer les moyens à friction soit encore par action hydraulique, en exploitant la pression centrifuge du fluide caloporteur dans ladite enceinte et/ou la pression qui règne dans cette dernière, qui augmente avec la vitesse de rotation d'une pompe entraînée par le moteur précité. Bien entendu, les actions mécaniques et hydrauliques peuvent être combinées.

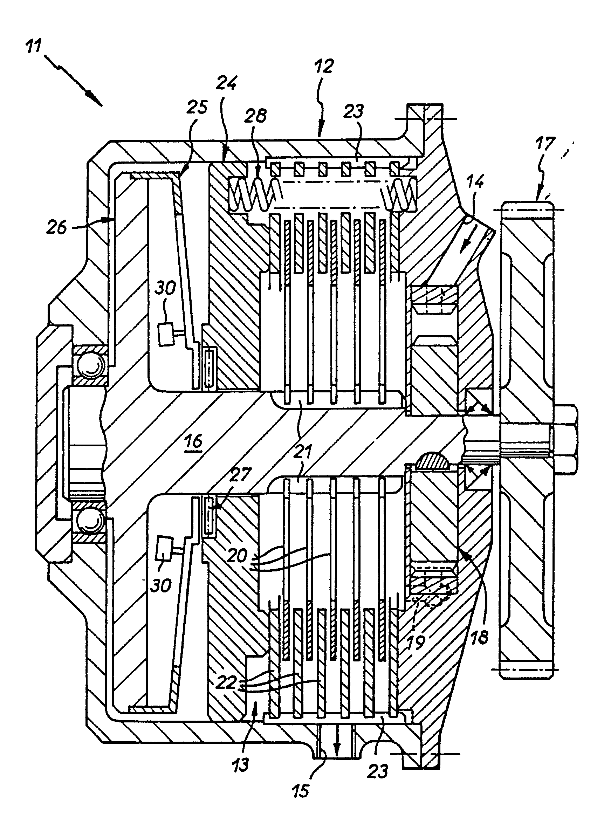

L'invention sera mieux comprise et d'autres avantages de celle-ci apparaîtront plus clairement à la lumière de la description qui va suivre d'un mode de réalisation donné d'un générateur de chaleur conforme à son principe, donnée uniquement à titre d'exemple et faite en référence au dessin annexé dans lequel:

La figure unique représente schématiquement ledit générateur de chaleur en coupe longitudinale.

En se reportant au dessin, on a représenté un générateur de chaleur 11 comportant un boîtier 12 dans lequel est ménagée une enceinte 13 à l'intérieur de laquelle un fluide caloporteur (huile ou eau glycolée) est admis à circuler entre une entrée 14 et une sortie 15. Un arbre 16 est monté en rotation dans le boîtier 12. Cet arbre est entraîné par une roue dentée 17 couplée au moteur (non représenté) du véhicule automobile. Une pompe à engrenage 18 est logée à l'intérieur du boîtier 12 et entraînée par l'arbre 16 lui-même. L'entrée 14 de fluide caloporteur communique avec la pompe 18 et cette dernière refoule ledit fluide caloporteur dans l'enceinte 13 par un élément de conduit 19. L'enceinte 13 abrite des moyens à friction mécanique à serrage variable. Plus précisément, ces moyens sont ici constitués par des premiers disques de friction 20 solidaires en rotation de l'arbre 16 et mobiles suivant la direction axiale de celui-ci, grâce à des cannelures longitudinales 21 pratiquées à la surface dudit arbre et par des seconds disques de friction 22 disposés en alternance avec lesdits premiers disques et mobiles dans l'enceinte 13 suivant la même direction axiale tout en étant bloqués contre toute rotation. Pour ce faire, des cannelures longitudinales 23 sont ménagées à la surface interne de l'enceinte 13 et les disques 22 coulissent le long de ces cannelures. Par ailleurs, un plateau de serrage 24 est monté coulissant axialement dans le boîtier 12. Des moyens de sollicitation constitués ici par un diaphragme précontraint 25 permettent d'appliquer le plateau de serrage contre les disques 20 et 22 de façon à les serrer les uns contre les autres. Le diaphragme 25 est porté extérieurement par un disque 26 et solidaire en rotation de celui-ci. Le disque 26 est solidaire de l'arbre 16. Le diaphragme 25 prend appui sur le plateau de serrage par l'intermédiaire d'un roulement à aiguilles 27 ou analogue. Des ressorts 28 sont disposés dans l'enceinte 13 pour maintenir en toutes circonstances le contact entre le plateau 24 et le diaphragme 25. Ces ressorts 28 développent une force axiale très inférieure à celle du diaphragme 25.

Selon l'invention, des moyens sont prévus pour engendrer une force s'opposant à celle qui est développée par le diaphragme 25 sur le plateau 24, cette force étant fonction de la vitesse de l'arbre 16, donc du moteur auquel est couplé cet arbre. Dans l'exemple représenté, trois moyens différents coopèrent pour engendrer cette force. Ainsi, le diaphragme 25 est équipé de masselottes 30 régulièrement réparties circulairement. Dans l'exemple, ces masselottes sont portées à l'extrémité de tiges sensiblement perpendiculaires à la surface inclinée du diaphragme de sorte que, en fonction de la vitesse de rotation de l'arbre 16, les forces centrifuges communiquées aux masselottes agissent sur le diaphragme dans un sens tendant à l'écarter du plateau 24. Celui-ci est donc repoussé par les ressorts 28 dans un sens tendant à desserrer les disques 20 et 22. De plus, selon une autre particularité avantageuse de l'invention, le plateau 24 forme une paroi mobile étanche de l'enceinte 13. De cette façon, la pression centrifuge provenant du fluide caloporteur lui-même, entraîné par le mouvement des disques 20, s'exerce aussi sur le plateau 24 dans un sens propre à desserrer les disques 20 et 22. Autrement dit, au fur et à mesure que la vitesse du moteur entraînant l'arbre 16 augmente, la pression centrifuge communiquée au fluide caloporteur dans l'enceinte 13 augmente aussi et contribue à desserrer les disques de friction et donc à réguler la quantité de chaleur produite. De même, le débit de la pompe 18 étant variable en fonction de la vitesse de rotation du moteur, la pression du fluide caloporteur à l'intérieur de l'enceinte augmente avec la vitesse ce qui contribue aussi à repousser le plateau 24 dans un sens propre à desserrer les disques 20 et 22. Tous les moyens mécaniques ou hydrauliques qui viennent d'être décrits peuvent être utilisés seuls ou en combinaison pour produire l'effet recherché, à savoir une certaine régulation de la quantité de chaleur produite par les disques de friction, qui soit relativement indépendante de la vitesse du moteur du véhicule automobile entraînant l'arbre 16.

Bien entendu, on pourra adjoindre au dispositif qui vient d'être décrit un embrayage électromagnétique intercalé entre le moteur du véhicule et l'arbre 16 et piloté par des moyens de commande thermostatique (non représentés) thermiquement couplés, directement ou indirectement au fluide caloporteur circulant dans l'enceinte 13 ou à l'élément à chauffer. La valeur de consigne des moyens de commande thermostatique sera ajustée depuis l'habitacle du véhicule. Avantageusement, dans le cas où ledit moteur est le moteur thermique du véhicule on pourra intercaler entre le moteur et l'arbre 16 un variateur de vitesse à limitation de plage de vitesses, comme par exemple un variateur de vitesse centrifuge à poulies et courroie, connu en soi et décrit par exemple dans le brevet français FR-A-2 522 765. L'interposition de ce variateur de vitesse permettra d'obtenir une production de chaleur suffisante même aux plus basses vitesses de rotation du moteur.

En variante, le diaphragme agit directement sur un élément tournant tel que disque ou rotor, ce qui évite l'utilisation du roulement 27.

Lorsque le frein baigne dans de l'huile, on prévoiera un échangeur huile/eau ou un échangeur huile/air.

## Revendications

1. Générateur de chaleur pour véhicule automobile à moteur du type comportant une enceinte (13) renfermant des moyens à friction mécanique (20, 22) couplés audit moteur pour être entraînés en rotation, des moyens (14, 15) pour faire circuler un fluide caloporteur dans ladite enceinte, et des moyens de serrage variable desdits moyens à friction mécanique, caractérisé en ce que les moyens de serrage sont constitués par des moyens de sollicitation à action élastique (25) agencés pour s'exercer sur les moyens à friction dans un sens propre à provoquer ledit serrage er par des moyens (30, 18) pour réduire le serrage desdits moyens à friction mécanique lorsque la vitesse d'entraînement augmente.

2. Générateur de chaleur selon la revendication 1, caractérisé en ce qu'il comporte des premiers disques de friction (20) solidaires en rotation d'un arbre (16) monté dans ladite enceinte et mobiles suivant la direction axiale de cet arbre, ledit arbre étant couplé audit moteur, des seconds disques de friction (22) disposés en alternance avec lesdits premiers disques, mobiles dans ladite enceinte suivant ladite direction axiale et bloqués contre toute rotation et un plateau de serrage (24) monté coulissant axialement, lesdits moyens de sollicitation (25) étant agencés pour appliquer ledit plateau de serrage contre les disques de façon à les serrer les uns contre les autres.

3. Générateur de chaleur selon la revendication 2, caractérisé en ce que lesdits moyens de sollicitation comportent un diaphragme (25) précontraint, agencé pour appliquer ledit plateau contre lesdits disques, ledit diaphragme étant solidaire en rotation dudit arbre et en ce que des masselottes (30) entraînées en rotation par ledit arbre coopèrent avec ledit diaphragme de façon à lui appliquer, en fonction des forces centrifuges, une force dans un sens propre à réduire l'effort qu'il exerce sur ledit plateau.

4. Générateur de chaleur selon la revendication 2 ou 3, caractérisé en ce que ledit plateau (24) forme une paroi mobile étanche de l'enceinte précitée dans laquelle circule ledit fluide caloporteur, de façon à être soumis à la pression centrifuge provenant dudit fluide caloporteur lui-même.

5. Générateur de chaleur selon la revendication 4, caractérisé en ce que ledit fluide caloporteur est entraîné par une pompe à débit variable (18), mécaniquement couplée au moteur de façon qu'une augmentation de vitesse de celui-ci engendre une augmentation de pression dans ladite enceinte, agissant sur ledit plateau en forme de paroi mobile.

6. Générateur de chaleur selon la revendication 5, caractérisé en ce que ladite pompe (18) est une pompa à engrenage directement couplée à l'arbre (16) précité.

7. Générateur de chaleur selon l'une des revendications précédentes, caractérisé en ce que ledit arbre est mécaniquement couplé au moteur par l'intermédiaire d'un embrayage, par exemple un embrayage électromagnétique, piloté par des moyens de commande thermostatique thermiquement couplés audit fluide caloporteur.

8. Générateur de chaleur selon l'une des revendications précédentes, caractérisé en ce que ledit arbre est entraîné par ledit moteur avec interposition d'un variateur de vitesse à limitation de plage de vitesses, comme par exemple un variateur de vitesse centrifuge à poulies et courroie.

## Patentansprüche

1. Wärmegenerator für Kraftfahrzeug von der Art, die ein Gehäuse (13) umfaßt, welches mechanische Reibelemente (20, 22) enthält, die mit dem genannten Motor gekoppelt sind und von diesem in Umdrehung versetzt werden, Elemente (14, 15) für die Zirkulation einer Wärmeträgerflüssigkeit im genannten Gehäuse, sowie verstellbare Klemmelemente für die genannten mechanischen Reibelemente, bestehend aus elastisch wirkenden Beanspruchungselementen (25), die geeignet sind, auf die Reibelemente in entsprechender Richtung so einzuwirken, daß die genannte Klemmung bewirkt wird, und aus Elementen (30, 18) zur Reduzierung der Klemmung der genannten mechanischen Reibelemente, wenn die Drehgeschwindigkeit zunimmt.

2. Wärmegenerator gemäß Anspruch 1, dadurch gekennzeichnet, daß er über erste Reibscheiben (20) verfügt, die rotierend fest mit einer im genannten Gehäuse angebrachten Welle (16) verbunden sind und die entsprechend der axialen Richtung dieser Welle bewegt werden können, wobei die genannte Welle mit dem genannten Motor gekoppelt ist, sowie zweite Reibscheiben (22), die abwechselnd mit den genannten ersten Scheiben angeordnet und im genannten Gehäuse entsprechend der genannten axialen Richtung beweglich und gegen jede Rotation blockiert sind, und eine Klemmplatte (24), die in Längsrichtung verschiebbar angebracht ist, wobei die genannten Beanspruchungselemente (25) so ausgelegt sind, daß sie die genannte Klemmplatte in einer Weise gegen die Scheiben drücken, daß diese gegeneinander verklemmt sind.

3. Wärmegenerator gemäß Anspruch 2, dadurch gekennzeichnet, daß die genannten Beanspruchungselemente eine vorgespannte Membran (25) enthalten, durch die die genannte Platte gegen die genannten Scheiben gedrückt wird, wobei die genannte Membran drehbar fest mit der genannten Welle verbunden ist, und daß Einsätze (30), die von der genannten Welle in Rotation versetzt werden, mit der genannten Membran so zusammenwirken, daß auf diese, entsprechend den Zentrifugalkräften, eine Kraft in einer Richtung ausgeübt wird, die geeignet ist, die auf die genannte Platte ausgeübte Beanspruchung zu reduzieren.

4. Wärmegenerator gemäß Anspruch 2 oder 3, dadurch gekennzeichnet, daß die genannte Platte (24) eine dichte bewegliche Wand des vorgenannten Gehäuses bildet, worin die genannte Wärmeträgerflüssigkeit zirkuliert, so daß die von der genannten Wärmeträgerflüssigkeit selbst ausgeübte Zentrifugalkraft darauf einwirken kann.

5. Wärmegenerator gemäß Anspruch 4, dadurch gekennzeichnet, daß die genannte Wärmeträgerflüssigkeit von einer Regelpumpe (18) in Bewegung gesetzt wird, die mechanisch so mit dem Motor gekoppelt ist, daß eine Drehzahlerhöhung desselben eine Druckerhöhung im genannten Gehäuse bewirkt, welches auf die genannte Platte in Form einer beweglichen Wand einwirkt.

6. Wärmegenerator gemäß Anspruch 5, dadurch gekennzeichnet, daß die genannte Pumpe (18) eine direkt mit der vorgenannten Welle (16) gekoppelte Zahnradpumpe ist.

7. Wärmegenerator gemäß einem der vorangegangenen Ansprüche, dadurch gekennzeichnet, daß die genannte Welle über eine Kupplung mechanisch mit dem Motor gekoppelt ist, z.B. über eine elektromagnetische Kupplung, die durch Thermostat-Regelelemente gesteuert wird, die thermisch mit der genannten Wärmeträgerflüssigkeit gekoppelt sind.

8. Wärmegenerator gemäß einem der vorangegangenen Ansprüche, dadurch gekennzeichnet, daß die genannte Welle vom genannten Motor über einen zwischengeschalteten Drehzahlregler angetrieben wird, dessen Drehzahlbereich begrenzt ist, wie z.B. durch einen Zentrifugaldrehzahlregler (variateur de vitesse centrifuge) mit Riemen und Riemenscheiben.

## Claims

1. A heat generator for motorized automobile vehicles of the kind comprising an enclosure (13), enclosing mechanical friction means (20, 22) coupled to the said motor to be entrained in rotation, means (14, 15) for circulating a heat transfer fluid in the said enclosure, and means for variably clamping the said mechanical means, characterized in that the clamping means are constituted by elastically acting loading means (25), arranged to act on the friction means in an appropriate direction to cause the said clamping, and by means (30, 18) to reduce clamping of the said mechanical friction means when the entraining speed increases.

2. A heat generator according to Claim 1, characterized in that it comprises first friction discs (20) fixed in rotation to a shaft (16) mounted in the said enclosure and movable in the axial direction of the shaft, the said shaft being coupled to the said motor, second friction discs (22) alternating with the said first discs, movable in the said axial direction in the said enclosure, and prevented from rotating, and an axially slidably clamping plate (24), the said loading means (25) being adapted to apply the said clamping plate against the discs so as to clamp them against each other.

3. A heat generator according to Claim 2, characterized in that the said loading means comprise a prestressed diaphragm spring (25) adapted to apply the said plate against the said discs, the said diaphragm spring being fixed to rotate with the said shaft, and in that flyweights (30) entrained in rotation by the said shaft cooperate with the said diaphragm spring so as to apply to it a force, depending on centrifugal forces, in a direction appropriate to reduce the force the spring exerts on the said plate.

4. A heat generator according to Claim 2 or 3, characterized in that the said plate (24) forms a fluidtight movable wall of the aforementioned enclosure in which the heat transfer fluid circulates, so that it is subjected to the centrifugal pressure of the said heat transfer fluid itself.

5. A heat generator according to Claim 4, characterized in that the said heat transfer fluid is moved by a variable throughput pump (18) mechanically coupled to the motor, so that an increase in speed of the latter causes an increase in pressure in the said enclosure which acts on the said plate forming a movable wall.

6. A heat generator according to Claim 5, characterized in that the said pump (18) is gear pump coupled directly to the aforementioned shaft (16).

7. A heat generator according to any one of the preceding claims, characterized in that the said shaft is mechanically coupled to the motor through the intermediary of a clutch, for example an electromagnetic clutch, operated by thermostatic control means thermally interfaced to the said heat transfer fluid.

8. A heat generator according to any one of the preceding claims, characterized in that the said shaft is entrained by the said motor through an interposed limited speed range variable speed drive such as, for example, a centrifugal type variable speed drive comprising pulleys and a drive belt.